# EUROPÄISCHE PATENTSCHRIFT

(11) **EP 2 861 867 B1**
(45) Veröffentlichungstag und Bekanntmachung des Hinweises auf die Patenterteilung: **16.05.2018**
(21) Anmeldenummer: 13727921.2
(22) Anmeldetag: 11.06.2013
(51) Int. Cl.: F03D 17/00

(54) **WINDENERGIEANLAGE UND VERFAHREN ZUM STEUERN EINER WINDENERGIEANLAGE ODER EINES WINDPARKS**
WIND TURBINE AND METHOD FOR CONTROLLING A WIND TURBINE OR A WIND FARM
ÉOLIENNE ET PROCÉDÉ DE COMMANDE D'UNE ÉOLIENNE OU D'UN PARC ÉOLIEN

(30) Priorität: 15.06.2012 DE 102012210150
(43) Veröffentlichungstag der Anmeldung: 22.04.2015
(73) Patentinhaber: Wobben Properties GmbH, 26607 Aurich (DE)
(72) Erfinder: STOLTENJOHANNES, Jürgen, 26605 Aurich (DE); BOHLEN, Werner Hinrich, 26723 Emden (DE); MELI, William, 22089 Hamburg (DE)
(74) Vertreter: Eisenführ Speiser
(86) Internationale Anmeldenummer: PCT/EP2013/062030
(87) Internationale Veröffentlichungsnummer: WO 2013/186211

(56) Entgegenhaltungen:
- WO-A2-2012/000513
- GB-A- 2 476 506
- US-A1- 2011 084 486
- "How is wind measured for wind turbines?", , 22. Mai 2011 (2011-05-22), XP55077375, Gefunden im Internet: URL:http://www.windpowerengineering.com/de sign/test-measurement/how-is-wind-measured / [gefunden am 2013-09-02]

## Beschreibung

Die vorliegende Erfindung betrifft eine Windenergieanlage und ein Verfahren zum Steuern bzw. Regeln einer Windenergieanlage oder eines Windparks.

Zur Steuerung bzw. Regelung einer Windenergieanlage ist es vorteilhaft, wenn Variablen wie beispielsweise die Windgeschwindigkeit oder der meteorologische Kennwert bekannt sind. Je besser und genauer die Messung der Variablen der Windverhältnisse erfolgt, desto besser kann die Windenergieanlage auf diese Variablen eingestellt werden.

EP 1 432 911 B1 zeigt ein Frühwarnsystem für eine Windenergieanlage basierend auf einem SODAR-System, welches an der Gondel der Windenergieanlage angebracht ist und den Bereich vor dem Rotor der Windenergieanlage erfasst. Mittels des SODAR-Systems können die Windverhältnisse vor der Windenergieanlage erfasst werden und die Steuerung bzw. Regelung der Windenergieanlagen kann entsprechend angepasst werden.

JP 2002 152975 A zeigt eine Windenergieanlage und eine separat angeordnete Radareinheit zum Erfassen eines Windvektors.

EP 1 770 278 A2 sowie GB 2476506 zeigen ein System zum Steuern einer Windenergieanlage. Mittels einer Light Detection and Ranging Device LIDAR wird die Windgeschwindigkeit vor der Windenergieanlage durch Erfassung der Reflexion oder Streuung des gesendeten Lichts erfasst und die Windenergieanlage wird entsprechend gesteuert.

US 6,166,661 zeigt ein Eiserfassungssystem für ein Flugzeug mit einem Radarsystem.

US 2002/0067274 A1 zeigt ein Verfahren zum Erfassen eines Hagelsturmes mit einer Radareinheit, wobei die Radareinheit zum Erfassen und Verfolgen des Hagelsturmes verwendet wird. Wenn ein Hagelsturm erfasst wird, dann wird ein Warnsignal erzeugt und die Position der Rotorblätter kann entsprechend geändert werden.

Es ist eine Aufgabe der vorliegenden Erfindung, eine Windenergieanlage und ein Verfahren zum Steuern bzw. Regeln einer Windenergieanlage oder eines Windparks vorzusehen, welche eine verbesserte Anpassung an Windverhältnisse oder meteorologische Kennwerte in der Umgebung der Windenergieanlage ermöglicht.

Diese Aufgabe wird durch eine Windenergieanlage gemäß Anspruch 1 und ein Verfahren zum Steuern einer Windenergieanlage oder eines Windparks gemäß Anspruch 5 gelöst.

Somit wird eine Windenergieanlage mit einer Gondel, einem Rotor, einem Spinner, einer ersten und/oder zweiten Mikrowellentechnik- und/oder Radartechnikmesseinheit zum Aussenden von Mikrowellen und/oder Radarwellen und zur Erfassung der Reflexion der Mikrowellen- und/oder Radarwellen vorgesehen, um Winddaten und/oder meteorologische Daten oder Informationen bezüglich eines Windfeldes vor und/oder hinter der Windenergieanlage zu erfassen. Die Windenergieanlage weist ebenfalls einen Regler auf, welcher den Betrieb der Windenergieanlage in Abhängigkeit der durch die erste und/oder zweite Messeinheit erfassten Daten steuert. Die erste und/oder zweite Mikrowellentechnik- und/oder Radartechnikmesseinheit ist auf der Gondel und/oder auf dem Spinner angeordnet.

Die Erfindung beruht auf dem Gedanken, an der Gondel der Windenergieanlage oder im Bereich des Spinners (der drehende Teil der Windenergieanlage) eine Messeinheit vorzusehen, welche mittels Mikrowellentechnik oder Radartechnik die Windverhältnisse oder meteorologischen Verhältnisse vor und/oder hinter der Windenergieanlage erfasst. Die durch die Messeinheit erfassten Winddaten und/oder meteorologischen Daten können an eine Steuerung der Windenergieanlage weitergeleitet werden. Die Steuerung der Windenergieanlage kann auf einem Feed-Forward-Prinzip beruhen, so dass der Betrieb der Windenergieanlage basierend auf den durch die Messeinheit erfassten Winddaten angepasst werden kann, beispielsweise um den Ertrag zu maximieren oder die Belastung auf die Windenergieanlage zu minimieren.

Mittels der Mikrowellentechnik- oder Radartechnik-Messeinheit können Turbulenzen, eine Schräganströmung, eine Nachlaufströmung, ein Windshear, eine Windveer, eine Windrichtung und/oder eine Windgeschwindigkeit bestimmt werden.

Gemäß der Erfindung können die durch die Messeinheit erfassten Winddaten zur Zustandsüberwachung der Windenergieanlage verwendet werden und die Modelle der Windenergieanlage können entsprechend angepasst werden.

Gemäß der Erfindung können die durch die Messeinheit erfassten Winddaten zur Steuerung von Windenergieanlagen in einem Windpark verwendet werden.

Gemäß einem weiteren Aspekt der vorliegenden Erfindung können die Winddaten zur Strukturüberwachung der Rotorblätter verwendet werden.

Die meteorologischen Kenngrößen können beispielsweise die Windgeschwindigkeit (z. B. mit ihrer horizontalen Komponente), abgeleitete Größen wie das Windgeschwindigkeitsprofil (Windshear), Turbulenzen, Standardabweichungen/mittlere Windgeschwindigkeit, Schräganströmung (Windgeschwindigkeit mit einer vertikalen Komponente), Windrichtung, Winddrehungsprofil über die Rotorkreisfläche (Windveer), Luftdruck, Lufttemperatur, Luftfeuchtigkeit, Luftdichte, Niederschlagsart, Bewölkung, Sichtweite und/oder Globalstrahlung darstellen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem ersten Ausführungsbeispiel,
- Fig. 2: zeigt eine schematische Darstellung einer Windenergieanlage gemäß einem zweiten Ausführungsbeispiel,
- Fig. 3: zeigt eine schematische Darstellung einer Feed Forward-Steuerung einer Windenergieanlage gemäß einem dritten Ausführungsbeispiel,
- Fig. 4: zeigt eine schematische Darstellung einer Zustandsüberwachung bei einer Windenergieanlage gemäß einem vierten Ausführungsbeispiel,
- Fig. 5: zeigt eine schematische Darstellung einer Optimierung eines Modells einer Windenergieanlage gemäß einem fünften Ausführungsbeispiel,
- Fig. 6: zeigt ein schematisches Blockschaltbild eines Windparks gemäß einem sechsten Ausführungsbeispiel,
- Fig. 7: zeigt eine schematische Darstellung einer zentralen Windparkregelung gemäß einem siebten Ausführungsbeispiel,

- Fig. 8: zeigt eine schematische Darstellung einer Windenergieanlage gemäß einem achten Ausführungsbeispiel,
- Fig. 9: zeigt eine schematische Darstellung einer Windenergieanlage gemäß einem neunten Ausführungsbeispiel,
- Fig. 10: zeigt eine schematische Darstellung einer Windenergieanlage gemäß der Erfindung,
- Fig. 11: zeigt eine weitere schematische Darstellung einer Windenergieanlage gemäß der Erfindung,
- Fig. 12: zeigt eine weitere schematische Darstellung einer Windenergieanlage gemäß der Erfindung, und
- Fig. 13: zeigt eine schematische Darstellung von einer Mehrzahl von Messfeldern für eine Windenergieanlage gemäß der Erfindung

Eine Vorhersage der Windstruktur stellt eine Möglichkeit dar, die durch den Wind verursachte aerodynamische Belastung der Windenergieanlage und insbesondere des Rotors der Windenergieanlage zu verringern. Hierbei kann beispielsweise der Anstellwinkel (Pitchwinkel) der Rotorblätter entsprechend variiert werden. Mittels der Vorhersage der Windstruktur beispielsweise durch die erfindungsgemäße Mikrowellentechnik- oder Radartechnik-Messeinheit kann auch eine Ertragsoptimierung, eine Schalloptimierung, eine Strukturüberwachung und dergleichen sowohl für eine Windenergieanlage als auch für einen Windpark für eine Mehrzahl von Windenergieanlagen durchgeführt werden.

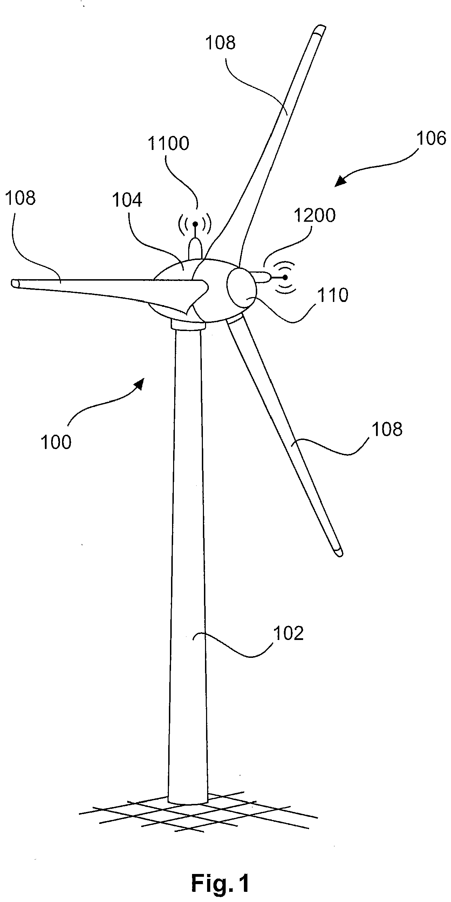

Fig. 1 zeigt eine schematische Darstellung einer Windenergieanlage 100 gemäß einem ersten Ausführungsbeispiel. In Fig. 1 ist eine Windenergieanlage 100 mit einem Turm 102 und einer Gondel 104 gezeigt. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Anstellwinkel (Pitchwinkel) der Rotorblätter 108 ist einstellbar. An der Gondel 104 kann ein Mikrowellen- oder Radartechnik-Messtechnik 1100 und/oder an dem Spinner 110 kann ebenfalls eine weitere Mikrowellen- und/oder RadartechnikMesseinheit 1200 vorgesehen sein. Diese Messeinheiten 1100, 1200 dienen dazu, die Windverhältnisse vor der Windenergieanlage 100 (bei der Messeinheit 1200) oder vor und hinter der Windenergieanlage 100 (mit der Messeinheit 1100) zu erfassen.

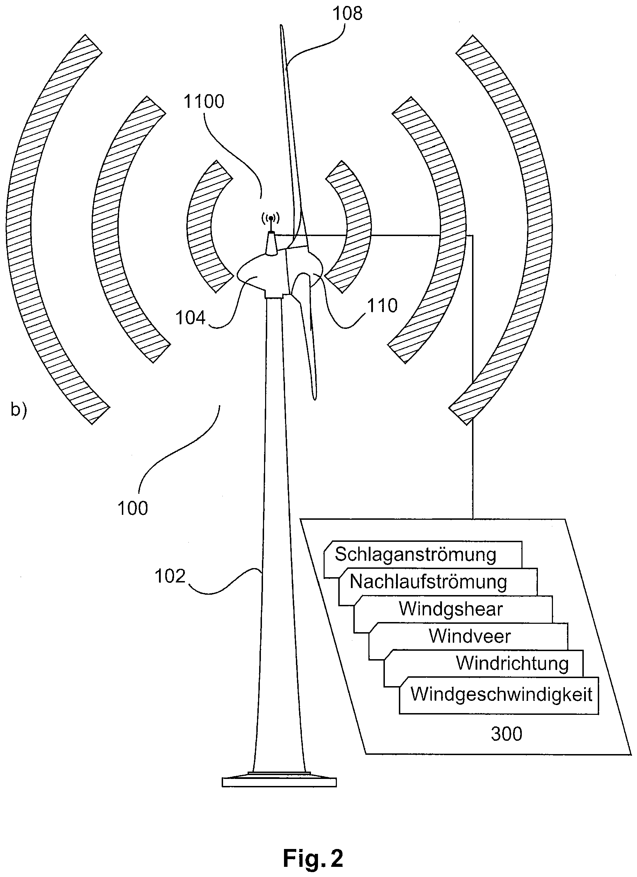

Fig. 2 zeigt eine schematische Darstellung einer Windenergieanlage gemäß einem zweiten Ausführungsbeispiel. Die Windenergieanlage gemäß Fig. 2 (zweites Ausführungsbeispiel) kann der Windenergieanlage gemäß dem ersten Ausführungsbeispiel von Fig. 1 entsprechen. Auf der Gondel 104 der Windenergieanlage ist eine Mikrowellen- oder Radartechnik-Messeinheit 1100 vorgesehen. Die Messeinheit 1100 kann Radar- und/oder Mikrowellen aussenden und Reflektionen dieser Radarwellen oder Mikrowellen erfassen, um daraus Erkenntnisse zu den Windverhältnissen und/oder meteorologischen Verhältnissen vor und hinter der Windenergieanlage abzuleiten. Insbesondere das Anordnen der Messeinheit 1100 auf der Gondel 104 (d. h. der sich nicht drehende Teil der Anlage) ermöglicht eine Erfassung der Windverhältnisse sowohl vor als auch hinter der Windenergieanlage 100. Die Windverhältnisse hinter der Windenergieanlage 100 können auch von Bedeutung sein, da sie Aufschluss u. a. über die Effektivität der Umwandlung der kinetischen Energie in eine Drehbewegung der Rotorblätter 108 geben können.

Wenn die Mikrowellen- oder Radartechnik-Messeinheit 1200 auf dem Spinner 110 der Windenergieanlage 100 vorgesehen ist, so kann eine Erfassung der Windverhältnisse vor der Windenergieanlage erfolgen. Gemäß dem zweiten Ausführungsbeispiel können Turbulenzen, eine Schräganströmung, eine Nachlaufströmung, eine Windshear, eine Windveer, eine Windrichtung und eine Windgeschwindigkeit mittels der Messeinheiten 1100, 1200 und eines Reglers 30 erfasst werden. Die Windveer stellt hierbei die Windrichtungsdrehung über die Höhe dar und die Windshear das Windprofil über die Höhe. Diese Messgrößen können mittels der Messeinheit 1100, 1200 erfasst und an die Steuerung der Windenergieanlage weitergeleitet werden, welche die Steuergesetze der Windenergieanlage entsprechend anpassen kann.

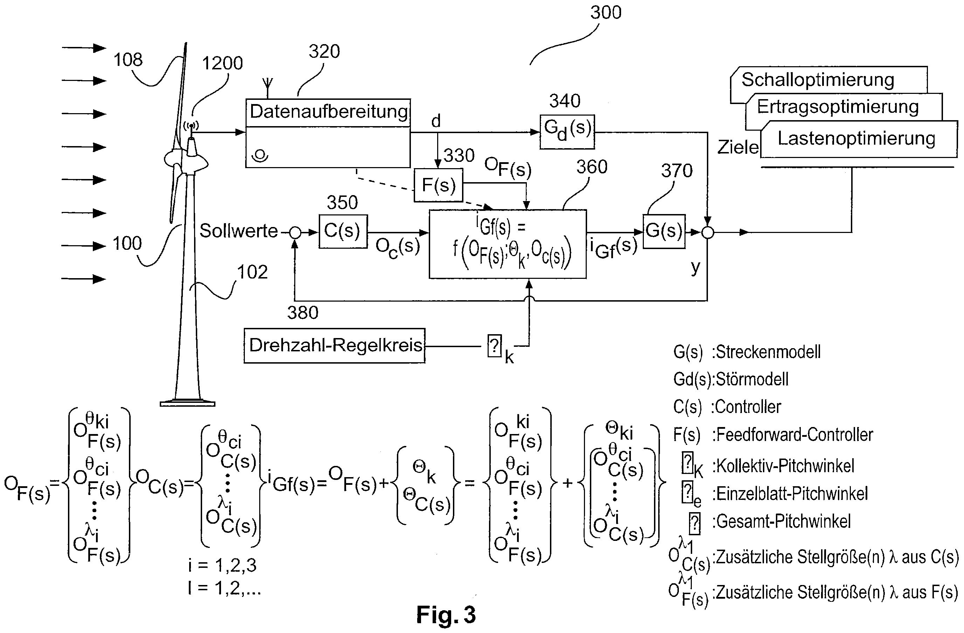

Fig. 3 zeigt eine schematische Darstellung eines Feed-Forward-Reglers 300 einer Windenergieanlage gemäß einem dritten Ausführungsbeispiel. Die Windenergieanlage 100 gemäß dem dritten Ausführungsbeispiel kann auf einer Windenergieanlage 100 gemäß dem ersten oder zweiten Ausführungsbeispiel beruhen. Insbesondere ist in Fig. 3 ein Regler 300 der Windenergieanlage gezeigt. Die Windenergieanlage 100 gemäß dem dritten Ausführungsbeispiel weist ferner eine Mikrowellentechnik- oder Radartechnik-Messeinheit 1100 oder 1200 auf. Die von der Messeinheit 1100, 1200 ermittelten Daten können in einer Datenaufbereitungseinheit 320 des Reglers 300 aufbereitet werden. Der Regler 300 der Windenergieanlage 100 kann einen Feed-Forward-Regler 330, eine Streckenmodelleinheit 370, eine Störmodelleinheit 340, einen Controller 350 und einen Drehzahlregelkreis 380 aufweisen.

Aus den durch die Messeinheit 1200 erfassten Windfelddaten bzw. Winddaten und/oder meteorologischen Daten können diejenigen Parameter bestimmt werden, welche charakteristisch für Störeffekte in dem Windfeld sind. Wenn die Störungen vorab bekannt sind, dann kann mittels einer Feed-Forward-Steuerung den Störeffekten entgegen gewirkt werden. Die Messeinheit 1200 kann wie bereits oben beschrieben die Windgeschwindigkeit, die Windrichtung, die Windveer, die Windshear, die Nachlaufströmung, die Turbulenzen und/oder eine Schräganströmung ermitteln. In der Störmodelleinheit 340 ist ein Störverhalten gespeichert und in der Streckenmodelleinheit 370 ist ein Modell der Windenergieanlage gespeichert.

Basierend auf den Messdaten der Messeinheit 1200 können die Ausrichtung der Stellgröße i_{Gf} (s) ermittelt werden. Dies kann in dem Feed-Forward-Regler 330 erfolgen. In der Störmodelleinheit 340 kann eine Abbildung der Störgrößen auf den Prozessausgang modelliert werden. Mittels der Störmodelleinheit 340 kann eine Störgrößenkompensation durchgeführt werden. Eine Kompensation der Störgrößen kann über den Anstellwinkel der Rotorblätter durch die Feed-Forward Regelung (Vorwärtsregelung) erfolgen. Alternativ oder zusätzlich zur Einstellung des Einstellwinkels kann auch eine Profiländerung der Rotorblätter (d. h. eine aktive Änderung des Rotorblattes zur Pitchverstellung) vollzogen werden. Der Regler 350 dient dazu, das Reglergesetz zur Abbildung der Optimierungsziele auf die Stellmöglichkeiten anzupassen. In dem Regler 350 können die Änderungsgesetze für den Anstellwinkel sowie die anderen Stellgrößen vorgesehen sein.

Zur Verbesserung der Störübertragungsfunktion kann die Windstruktur am Orte der Windenergieanlage sowie die meteorologischen Eigenschaften heran gezogen werden.

Zur Optimierung des Feed Forward-Reglers 330 kann optional eine Anpassung der Übertragungsfunktion F(s) erfolgen. Mit anderen Worten, die Parameter der Übertragungsfunktion F(s) können anhand der in der Datenaufbereitungseinheit 320 aufbereiteten Messdaten der Messeinheit 1200 oder 1100 angepasst werden. Somit kann eine adaptive Kompensation der Störgröße ermöglicht werden.

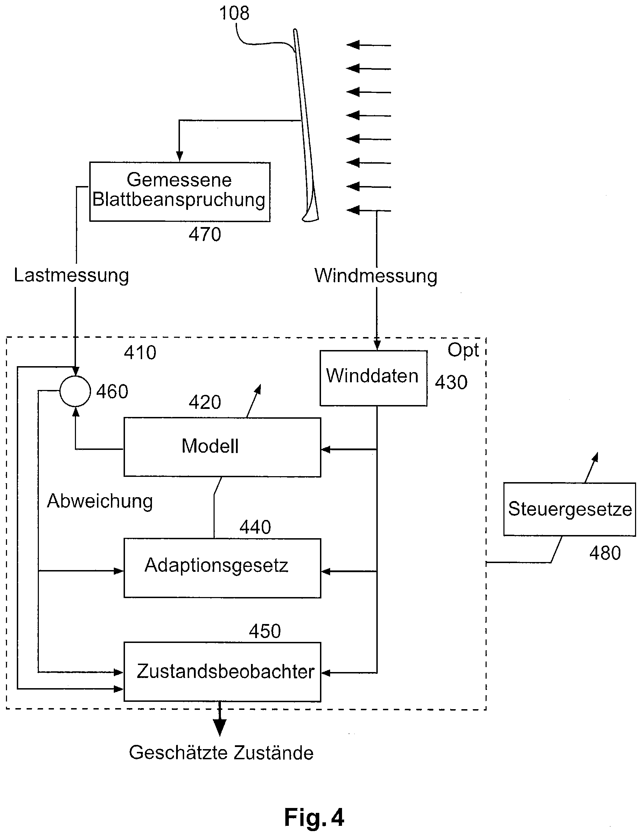

Fig. 4 zeigt eine schematische Darstellung einer Zustandsüberwachung bei einer Windenergieanlage gemäß einem vierten Ausführungsbeispiel. Gemäß dem vierten Ausführungsbeispiel können die Messdaten der Messeinheiten 1100, 1200 für eine Zustandsüberwachungseinheit 410 der Windenergieanlage oder Teile davon verwendet werden. Die Zustandsüberwachungseinheit 410 der Windenergieanlagen ist notwendig, um u. a. Anlagenstillzeiten zu verringern. Ferner kann die Zustandsüberwachung zur Weiterentwicklung der Windenergieanlagen verwendet werden. Die Zustandsüberwachung kann sowohl für die Rotorblätter, die Gondel, den Rotor und/oder den Turm der Windenergieanlagen verwendet werden.

Die Messdaten der Messeinheit 1100, 1200 können in einer Winddatenspeichereinheit 430 gespeichert werden. Mittels einer Blattbeanspruchungs-Messeinheit 470 können die tatsächlichen Beanspruchungen der Rotorblätter 108 erfasst werden. Die in der Winddatenspeichereinheit 430 gespeicherten Winddaten werden der Windenergieanlagen-Modelleinheit 420 zugeführt, welche die Daten in das Modell einfügt. In einer Vergleichseinheit 460 werden die Ausgangssignale der Modelleinheit 420 mit den Ausgangssignalen der Blattbeanspruchungs-Messeinheit 470 verglichen. Wenn keine Abweichung festgestellt werden kann, dann entspricht das Modell der tatsächlichen Windenergieanlage. Wenn jedoch Abweichungen vorhanden sind, dann deutet dies darauf hin, dass das in der Modelleinheit 420 gespeicherte Modell nicht mit der Wirklichkeit übereinstimmt. In einer Zustandsbeobachtereinheit 450 können die durch die Messeinheit 1100, 1200 erfassten Winddaten zu einer Modellzustandsschätzung verwendet werden. Anhand der geschätzten Zustände kann ein aktueller Strukturzustand dieses Rotorblattes 108 rekonstruiert werden.

Wenn beim Vergleich zwischen der erfassten Blattbeanspruchung und der durch das Modell ermittelten Blattbeanspruchung ermittelt wird, dass Unterschiede vorhanden sind, dann können die theoretischen Lastmodellannahmen zur Windparkposition angepasst werden. Dies kann in der Adaptionsgesetzeinheit 440 erfolgen. Die Anpassung kann sowohl online als auch offline erfolgen.

Bei einer Inbetriebnahme der Windenergieanlage kann die Lastannahme mittels der Messergebnisse der Messeinheit 1100, 1200 überprüft werden. Wenn die Abweichungen zwischen den ermittelten Messwerten und den durch das Modell bestimmten Werte zu groß sind, dann können in der Steuergesetzeinheit 480 Änderungen zur Lastenoptimierung erfolgen. Dies kann vorteilhaft im Hinblick auf die Kosten, eine Schalloptimierung und eine Ertragsoptimierung sein.

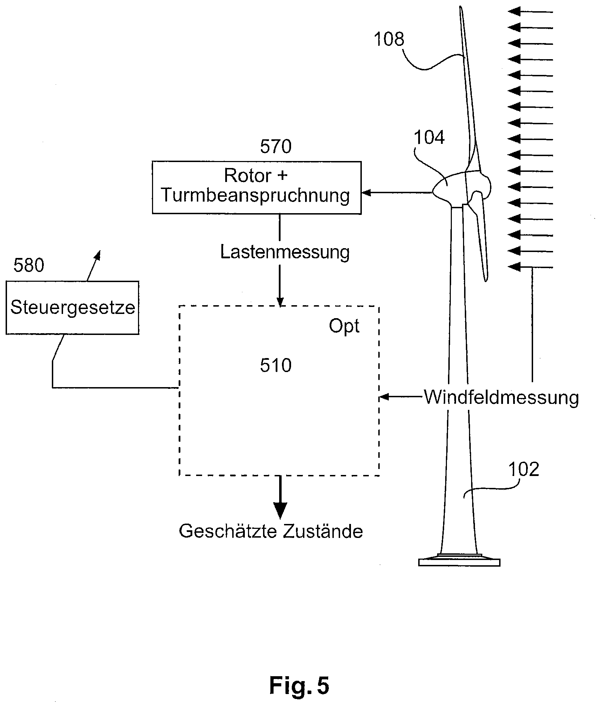

Fig. 5 zeigt eine schematische Darstellung einer Optimierung eines Modells einer Windenergieanlage gemäß einem fünften Ausführungsbeispiel. In Fig. 5 kann abgesehen von einer Überwachung der Beanspruchung der Rotorblätter 108 auch eine Überwachungseinheit 510 zum Überwachen der Beanspruchung des Rotors 106 und des Turms 102 erfolgen. Dazu ist eine Rotor- und/oder Turmbeanspruchungs-Überwachungseinheit 570, eine Optimierungseinheit 520 und optional eine Steuergesetzeinheit 580 vorgesehen. Die lastentechnische Optimierung kann hierbei wie gemäß Fig. 4 beschrieben erfolgen.

Ferner kann eine Lasten- und/oder Ertragsoptimierung bzw. Schalloptimierung nicht nur für eine einzige Windenergieanlage, sondern auch für einen Windpark mit einer Mehrzahl von Windenergieanlagen erfolgen. Hierbei kann sowohl die lokale Windsituation als auch die Windparktopologie (Anzahl der Windenergieanlagen, Ausrichtung der Windenergieanlagen, Abstand zwischen den Windenergieanlagen) berücksichtigt werden.

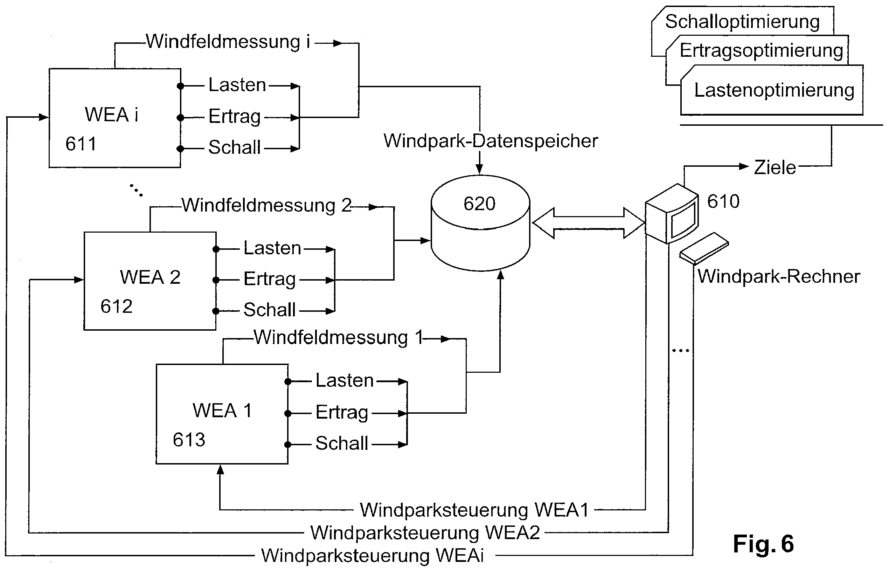

Fig. 6 zeigt ein schematisches Blockschaltbild eines Windparks gemäß einem sechsten Ausführungsbeispiel. In der in Fig. 6 gezeigten Situation kann ein Windpark eine Mehrzahl von Windenergieanlagen 611, 612, 613 aufweisen, wobei zumindest eine der Windenergieanlagen eine Mikrowellentechnik- oder Radartechnik-Messeinheit 1100, 1200 aufweist. Die Ergebnisse der Windmessung können an einen zentralen Windpark-Datenspeicher 620 weitergeleitet werden.

Ein Windparkrechner 610 kann mit dem Windpark-Datenspeicher 620 verbunden sein. Der Windparkrechner 610 kann ferner jeweils mit den Windenergieanlagen verbunden sein und kann diese steuern. Die Steuerung der einzelnen Windenergieanlagen des Windparks kann auf einer Schalloptimierung, einer Ertragsoptimierung und/oder einer Lastenoptimierung beruhen.

In den jeweiligen Windenergieanlagen gemäß dem sechsten Ausführungsbeispiel kann ein Feed-Forward-Regler gemäß dem dritten Ausführungsbeispiel vorgesehen sein. Zusätzlich oder alternativ dazu kann in dem Windparkrechner 610 beispielsweise auch eine Feed-Forward-Kompensation gemäß dem dritten Ausführungsbeispiel implementiert sein. Als Eingangssignale für die Feed Forward-Kompensation dienen mindestens die Winddaten einer Messeinheit 1100, 1200 auf einer Windenergieanlage. Vorzugsweise werden jedoch die Winddaten der Messeinheiten 1100, 1200 aller Windenergieanlagen mit berücksichtigt. Der Windparkrechner 610 kann ferner dazu ausgestaltet sein, die Windenergieanlagen 100 derart zu steuern, dass die Belastung gleichmäßig auf die Windenergieanlagen 100 verteilt wird.

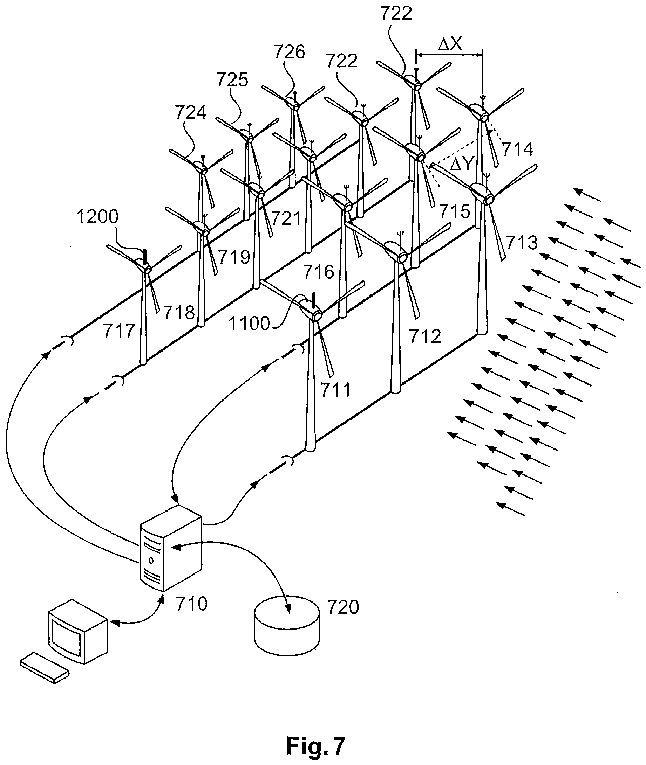

Fig. 7 zeigt eine schematische Darstellung einer zentralen Windparkregelung gemäß einem siebten Ausführungsbeispiel. In Fig. 7 sind eine Mehrzahl von Windenergieanlagen 711 - 726 gezeigt, welche mit einem zentralen Windparkrechner 710 verbunden sind.

Der Windparkrechner 710 ist wiederum mit einem Windparkdatenspeicher 720 gekoppelt. Die Entfernung zu benachbarten Windenergieanlagen beträgt Δx bzw. Δy.

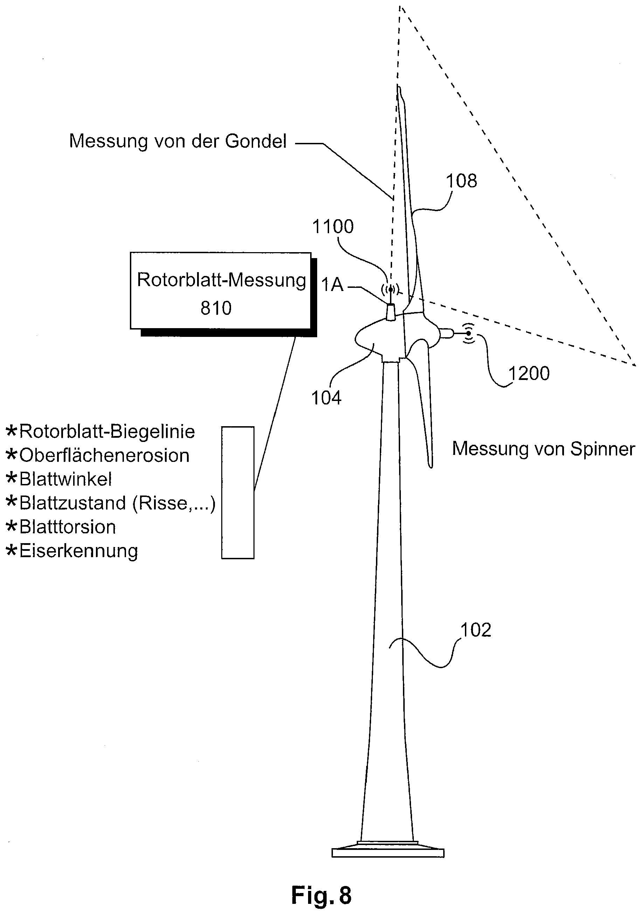

Fig. 8 zeigt eine schematische Darstellung einer Windenergieanlage gemäß einem achten Ausführungsbeispiel. In Fig. 8 ist eine Windenergieanlage 100 mit einem Turm 102, einer Gondel 104 und einer ersten und/oder zweiten Mikrowellen- oder Radar-Messeinheit 1100, 1200 gezeigt. Die erste und/oder zweite Messeinheit kann dazu verwendet werden, die Rotorblätter 108 zu vermessen. In einer Rotorblattmesseinheit 810 kann aus den Messdaten der ersten und/oder zweiten Messeinheit 1100, 1200 eine Rotorblatt-Biegelinie, eine Oberflächenerosion, ein Blattwinkel, Blattzustände, Blatttorsion und eine Eiserkennung ermittelt werden.

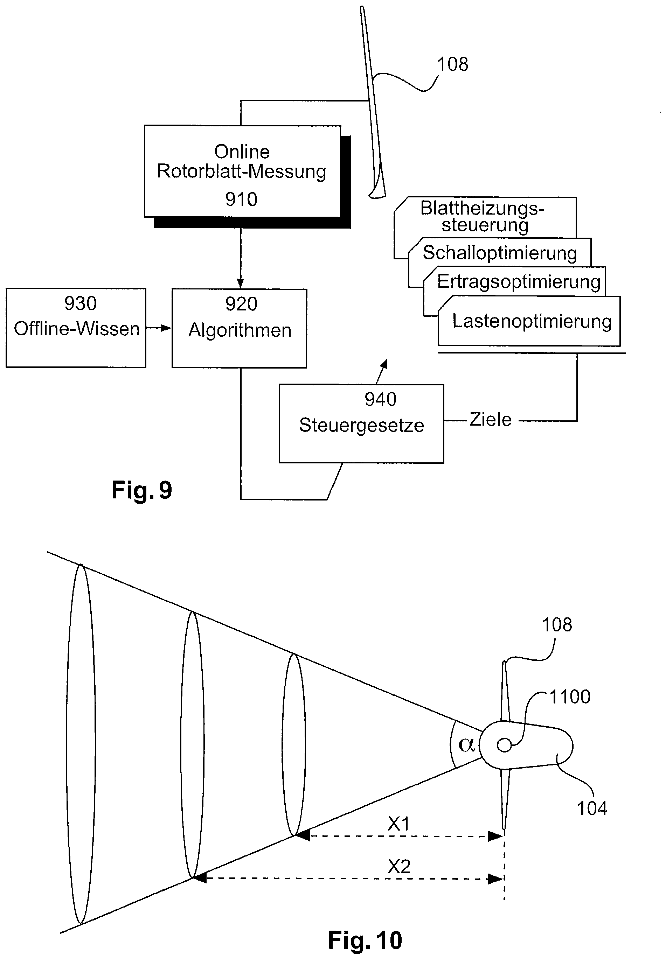

Fig. 9 zeigt eine schematische Darstellung einer Windenergieanlage gemäß einem neunten Ausführungsbeispiel. Die Rotorblätter 108 einer Windenergieanlage werden mittels einer Rotorblattmesseinheit 910 vermessen. Die Ergebnisse der Rotorblattmesseinheit 910 werden einer Algorithmeneinheit 920 zugeführt. Ferner werden Daten aus einer Offline-Wissenseinheit 930 ebenfalls der Algorithmeneinheit 920 zugeführt. Das Ausgangssignal der Algorithmeneinheit 920 kann einer Steuergesetzeinheit 940 zugeführt werden.

Gemäß der Erfindung kann in einem Windpark die durch eine der Windenergieanlagen erzeugte Verwirbelung reduziert werden, so dass der Abstand zu den benachbarten Windenergieanlagen reduziert werden kann.

Gemäß der Erfindung kann bei der Erfassung des Nachfeldes die Windenergieanlage 100 derart betrieben werden, dass die Leistung einer benachbarten bzw. nachfolgenden Windenergieanlage optimiert wird bzw. dass die Gesamtleistung der Windenergieanlagen des Windparks optimiert wird.

Gemäß einem weiteren Aspekt der vorliegenden Erfindung kann mit der oben beschriebenen Windenergieanlage 100 und der Mikrowellentechnik- und/oder Radartechnik-Messeinheit 1100, 1200 eine Blattvermessung erfolgen, indem mittels der Mikrowellentechnik- und/oder Radartechnik-Messeinheit die Rotorblätter vermessen werden.

Gemäß einem weiteren Aspekt der vorliegenden Erfindung können mittels der Mikrowellentechnik- und/oder Radartechnik-Messeinheit nicht nur die Rotorblätter, sondern auch andere Teile der Windenergieanlage erfasst und vermessen werden, so dass die Windenergieanlage zu jeder Zeit einen aktuellen Zustand der Anlage kennt. Mittels der Mikrowellentechnik- und/oder Radartechnik-Messeinheit kann eine Erosion (Abweichung vom Sollzustand) und/oder ein Eisansatz an dem Rotorblatt erkannt werden. Mit der erfindungsgemäßen Mikrowellentechnik- und/oder Radartechnik-Messeinheit kann nicht nur eine Erosion bzw. ein Eisansatz, sondern auch die Position der Erosion und des Eisansatzes bestimmt werden.

Fig. 10 zeigt eine schematische Darstellung einer Windenergieanlage gemäß der Erfindung. Hierbei sind eine Gondel 104 sowie zwei Rotorblätter 108 der Windenergieanlage 100 gezeigt. Ferner ist eine erfindungsgemäße Messeinheit 1100 auf der Gondel vorgesehen und strahlt ein Messfeld mit einem Öffnungswinkel *α* ab. In Abhängigkeit der Entfernung x1, x2 von der erfindungsgemäßen Messeinheit 1100 vergrößert sich die Fläche der Messebene.

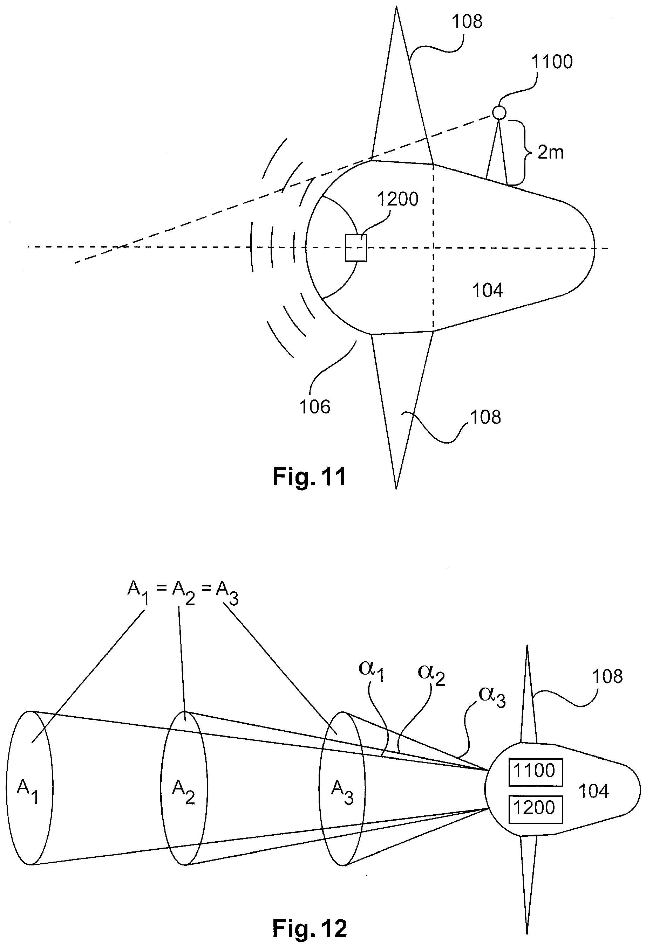

Fig. 11 zeigt eine weitere schematische Darstellung einer Windenergieanlage gemäß der Erfindung. Auf der Gondel 104 kann eine erfindungsgemäße Messeinheit 1100 beispielsweise in einer Höhe von 2 m (oder höher) angeordnet werden. Die erfindungsgemäße Messeinheit 1100 muss eine Mindesthöhe über der Gondel 104 haben, damit diese ein Windfeld vor der Windenergieanlage messen kann.

Optional kann eine weitere erfindungsgemäße Messeinheit 1200 auf dem Rotor 106 der Windenergieanlage vorgesehen sein. Hierbei kann die Geometrie des Rotors 106 für die Montage der Messeinheit verwendet werden. Wenn, wie erfindungsgemäß beschrieben, eine Messeinheit 1200 auf dem Rotor 106 angeordnet ist, dann kann eine Abschattung aufgrund des Rotorblattdurchganges (wie bei einer erfindungsgemäßen Messeinheit 1100 vorhanden) vermieden werden.

Fig. 12 zeigt eine weitere schematische Darstellung einer Windenergieanlage gemäß der Erfindung. Die Windenergieanlage kann eine erfindungsgemäße Messeinheit 1100 und/oder 1200 aufweisen. Durch Auswahl der jeweiligen Öffnung des jeweiligen Öffnungswinkels *α*1, *α*2 und *α*3 kann - wie dargestellt - sichergestellt werden, dass die Messebenen A1, A2, A3 die gleiche Größe bzw. die gleiche Fläche aufweisen.

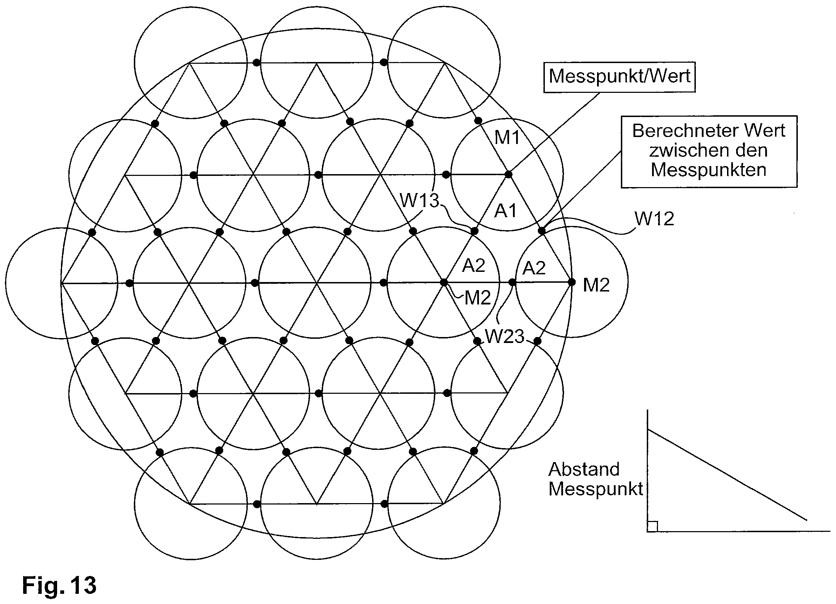

Fig. 13 zeigt eine schematische Darstellung von einer Mehrzahl von Messfeldern für eine Windenergieanlage gemäß der Erfindung. Durch die Verwendung einer Mehrzahl von Messfeldern A1, A2, A3 kann sowohl ein Messwert innerhalb der jeweiligen Messfelder A1, A2, A3 als auch Messwerte zwischen den jeweiligen Messpunkten ermittelt werden.

Somit kann eine genauere Ermittlung der Windfelder vor und hinter der Windenergieanlage erfolgen. Erfindungsgemäß müssen mindestens zwei Messpunkte M1, M2 vorhanden sein, um mittels des Öffnungswinkels *α* den Windvektor W12 berechnen zu können. Mit lediglich einem Messpunkt kann nur die Windgeschwindigkeit entlang des Messpfades erfasst werden. Der Abstand der Messpunkte in Richtung der Blattspitze wird verkleinert, d.h. im Blattaußenbereich wird eine höhere Auflösung ermöglicht. Hierbei sei darauf hingewiesen, dass gerade im Blattaußenbereich durch den Abstand zur Rotorachse Blattbiegemomente erzeugt werden, welche nunmehr erfasst werden können.

## Patentansprüche

1. Windenergieanlage (100), mit
einer Gondel (104),
einem Rotor (106) mit mindestens zwei Rotorblättern (108)
einem Spinner (110),
einer ersten und/oder zweiten Mikrowellentechnik- und/oder Radartechnik-Messeinheit (1100, 1200) zum Aussenden von Mikrowellen und/oder Radarwellen und zur Erfassung der Reflektionen der Mikrowellen und/oder Radarwellen, um Winddaten und/oder meteorologische Daten oder Informationen bezüglich eines Windfeldes vor und/oder hinter der Windenergieanlage (100) zu erfassen, und
einem Regler (300), welcher den Betrieb der Windenergieanlage in Abhängigkeit der durch die erste und/oder zweite Messeinheit (1100, 1200) erfassten Daten steuert,
wobei die erste und/oder zweite Mikrowellentechnik- und/oder Radartechnik-Messeinheit (1100, 1200) auf der Gondel (104) und/oder dem Spinner (110) angeordnet ist, **dadurch gekennzeichnet, dass** die erste und/oder zweite Mikrowellentechnik- und/oder Radartechnikmesseinheit (1100, 1200) dazu ausgestaltet ist/sind, das Rotorblatt (108) mittels der Mikrowellen und/oder Radarwellen zu vermessen.

2. Windenergieanlage nach Anspruch 1, wobei der Regler auf einer Feed Forward-Regelung basiert und die durch die erste und/oder zweite Messeinheit (1100, 1200) erfassten Winddaten für die Feed-Forward-Regelung verwendet werden.

3. Windenergieanlage nach Anspruch 1 oder 2, wobei
die erste und/oder zweite Messeinheit (1100, 1200) dazu ausgestaltet ist, eine Schräganströmung, eine Nachlaufströmung, ein Windshear, ein Windveer, eine Windrichtung und/oder eine Windgeschwindigkeit vor und/oder hinter der Windenergieanlage zu ermitteln.

4. Windenergieanlage nach einem der Ansprüche 1 bis 3, wobei der Regler (300) eine Modelleinheit (370) aufweist, wobei die durch die erste und/oder zweite Messeinheit (1100, 1200) erfassten Winddaten der Modelleinheit (370) zugeführt werden und die Ergebnisse der Modellbildung in der Modelleinheit (370) mit den tatsächlich ermittelten Parametern der Windenergieanlage verglichen wird.

5. Verfahren zum Steuern einer Windenergieanlage oder einer Mehrzahl von Windenergieanlagen (100) in einem Windpark, wobei mindestens eine der Windenergieanlagen (100) eine Gondel (104), einen Spinner (110) und einen Rotor (106) mit mindestens zwei Rotorblättern (108) sowie eine erste und/oder zweite Mikrowellentechnik- oder Radartechnik-Messeinheit (1100, 1200) zur Erfassung von Winddaten und/oder meteorologischen Daten vor und/oder hinter der Windenergieanlage aufweist,
wobei die erste und/oder zweite Mikrowellentechnik- und/oder Radartechnik-Messeinheit (1100, 1200) auf der Gondel (104) und/oder dem Spinner (110) angeordnet ist, mit den Schritten:
Steuern mindestens einer Windenergieanlage (100) basierend auf den durch die erste und/oder zweite Messeinheit (1100, 1200) ermittelten Winddaten,
Vermessen des Rotorblattes mittels der ersten und/oder zweiten Mikrowellentechnik- und/oder Radartechnikmesseinheit (1100, 1200).

6. Windpark mit einer Mehrzahl von Windenergieanlagen, nach einem der Ansprüche 1 bis 4, wobei eine der Windenergieanlagen (100) eine erste und/oder zweite Mikrowellentechnik- und/oder Radartechnik-Messeinheit (1100, 1200) aufweist, die dazu ausgestaltet ist/sind, eine Messung des Windfeldes hinter der Windenergieanlage (100) vorzunehmen,
wobei die Steuerung der Windenergieanlage (100) dazu ausgestaltet ist, den Betrieb der Windenergieanlage zu optimieren und in den Betrieb der Windenergieanlage einzugreifen, um die Leistung des gesamten Windparks mit der Mehrzahl von Windenergieanlagen (100) in Abhängigkeit des gemessenen Windfeldes zu optimieren.

7. Windenergieanlage nach Anspruch 1, wobei die erste oder zweite Mikrowellentechnik- und/oder Radartechnikmesseinheit (1100, 1200) dazu ausgestaltet ist, eine Erosion und/oder einen Eisansatz an den Rotorblättern (106) zu erfassen.

## Claims

1. A wind power installation (100), comprising
a pod (104),
a rotor (106) having at least two rotor blades (108),
a spinner (110),
a first and/or second microwave technology and/or radar technology measuring unit (1100, 1200) for emitting microwaves and/or radar waves and for detecting the reflections of the microwaves and/or radar waves to acquire wind data and/or meteorological data or information in respect of a wind field in front of and/or behind the wind power installation (100), and
a regulator (300) which controls operation of the wind power installation (100) in dependence on the data detected by the first and/or second measuring unit (1100, 1200),
wherein the first and/or second microwave technology and/or radar technology measuring unit (1100, 1200) is arranged on the pod (104) and/or the spinner (110),
**characterized in that** the first and/or second microwave technology and/or radar technology measuring unit (1100, 1200) is/are adapted to measure the rotor blade (108) by means of the microwaves and/or radar waves.

2. A wind power installation according to claim 1 wherein the regulator is based on a feed forward regulation and the wind data detected by the first and/or second measuring unit (1100, 1200) are used for the feed forward regulation.

3. A wind power installation according to claim 1 or claim 2 wherein the first and/or second measuring unit (1100, 1200) is adapted to ascertain an inclined afflux flow, a trailing wake flow, a wind shear, a wind veer, a wind direction and/or a wind speed before and/or behind the wind power installation.

4. A wind power installation according to one of claims 1 to 3 wherein the regulator (300) has a model unit (370), wherein the wind data detected by the first and/or second measuring unit (1100, 1200) are fed to the model unit (370) and the results of modelling in the model unit (370) are compared to the actually ascertained parameters of the wind power installation.

5. A method of controlling a wind power installation or a plurality of wind power installations (100) in a wind park, wherein at least one of the wind power installations (100) has a pod (104), a spinner (110) and a rotor (106) having at least two rotor blades (108) as well as a first and/or second microwave technology or radar technology measuring unit (1100, 1200) for the detection of wind data and/or meteorological data in front and/or behind the wind power installation,
wherein the first and/or second microwave technology and/or radar technology measuring unit (1100, 1200) is arranged on the pod (104) and/or the spinner (110), comprising the steps:
controlling at least one wind power installation (100) based on the wind data ascertained by the first and/or second measuring unit (1100, 1200) and
measuring the rotor blade by means of microwaves and/or radar waves from the first and/or second microwave technology and/or radar technology measuring unit (1100, 1200).

6. A wind park comprising a plurality of wind power installations, according to one of claims 1 to 4, wherein one of the wind power installations (100) has a first and/or second microwave technology and/or radar technology measuring unit (1100, 1200) which is/are adapted to implement measurement of the wind field behind the wind power installation (100),
wherein the control means of the wind power installation (100) is adapted to optimise operation of the wind power installation and to intervene in operation of the wind power installation to optimise the power of the overall wind park with the plurality of wind power installations (100) in dependence on the measured wind field.

7. A wind power installation according to claim 1 wherein the first or second microwave technology and/or radar technology measuring unit (1100, 1200) is adapted to detect an erosion and/or ice accretion on the rotor blades (106).

## Revendications

1. Eolienne (100), avec
une nacelle (104),
un rotor (106) avec au moins deux pales de rotor (108),
un carénage (110),
une première et/ou seconde unité de mesure à micro-ondes et/ou à radar (1100, 1200) pour l'émission de micro-ondes et/ou d'ondes radar et pour la détection des réflexions des micro-ondes et/ou ondes radar afin de détecter des données de vent et/ou données météorologiques ou informations par rapport à un champ de vent devant et/ou derrière l'éolienne (100), et
une commande (300) qui commande le fonctionnement de l'éolienne en fonction des données détectées par la première et/ou seconde unité de mesure (1100, 1200),
dans laquelle la première et/ou seconde unité de mesure à micro-ondes et/ou à radar (1100, 1200) est disposée sur la nacelle (104) et/ou le carénage (110),
**caractérisée en ce que**
la première et/ou seconde unité de mesure à micro-ondes et/ou à radar (1100, 1200) est/sont configurée(s) afin de mesurer la pale de rotor (108) au moyen des micro-ondes et/ou ondes radar.

2. Eolienne selon la revendication 1, dans laquelle la commande est basée sur une commande à action directe et les données de vent détectées par la première et/ou seconde unité de mesure (1100, 1200) sont utilisées pour la commande à action directe.

3. Eolienne selon la revendication 1 ou 2, dans laquelle
la première et/ou seconde unité de mesure (1100, 1200) est configurée afin de déterminer un soufflage oblique, un soufflage de sillage, un cisaillement du vent, une rotation du vent, un sens du vent, et/ou une vitesse du vent devant et/ou derrière l'éolienne.

4. Eolienne selon l'une quelconque des revendications 1 à 3, dans laquelle la commande (300) présente une unité de modèle (370), dans laquelle les données de vent détectées par la première et/ou seconde unité de mesure (1100, 1200) sont transmises à l'unité de modèle (370) et les résultats de la formation de modèle dans l'unité de modèle (370) sont comparés avec les paramètres réellement déterminés de l'éolienne.

5. Procédé de commande d'une éolienne ou d'une pluralité d'éoliennes (100) dans un parc éolien, dans lequel au moins une des éoliennes (100) présente une nacelle (104), un carénage (110) et un rotor (106) avec au moins deux pales de rotor (108) ainsi qu'une première et/ou seconde unité de mesure à micro-ondes ou à radar (1100, 1200) pour la détection de données de vent et/ou données météorologiques devant et/ou derrière l'éolienne,
dans lequel la première et/ou seconde unité de mesure à micro-ondes et/ou à radar (1100, 1200) est disposée sur la nacelle (104) et/ou le carénage (110), avec les étapes :
la commande d'au moins une éolienne (100) en se basant sur les données de vent déterminées par la première et/ou seconde unité de mesure (1100, 1200),
la mesure de la pale de rotor au moyen de la première et/ou seconde unité de mesure à micro-ondes et/ou à radar (1100, 1200).

6. Parc éolien avec une pluralité d'éoliennes selon l'une quelconque des revendications 1 à 4, dans lequel une des éoliennes (100) présente une première et/ou seconde unité de mesure à micro-ondes et/ou à radar (1100, 1200) qui est/sont configurée(s) afin d'entreprendre une mesure du champ de vent derrière l'éolienne (100),
dans lequel la commande de l'éolienne (100) est configurée afin d'optimiser le fonctionnement de l'éolienne et d'intervenir dans le fonctionnement de l'éolienne pour optimiser la puissance du parc éolien entier avec la pluralité d'éoliennes (100) en fonction du champ de vent mesuré.

7. Eolienne selon la revendication 1, dans laquelle la première ou seconde unité de mesure à micro-ondes et/ou à radar (1100, 1200) est configurée afin de détecter une érosion et/ou une formation de glace sur les pales de rotor (106).
